# EUROPEAN PATENT SPECIFICATION

(11) **EP 3 946 905 B1**
(45) Date of publication and mention of the grant of the patent: **28.08.2024**
(21) Application number: 20782757.7
(22) Date of filing: 27.03.2020
(51) Int. Cl.: B29C 64/118, B29C 64/106, B29C 64/209, B29C 64/295, B33Y 10/00, B33Y 30/00, B33Y 70/00, B33Y 80/00

(54) **3D PRINTING OF INTERNALLY TRANSPARENT ARTICLES**
3D-DRUCKEN VON INTERN DURCHSICHTIGEN ARTIKELN
IMPRESSION 3D D'ARTICLES TRANSPARENTS À L'INTÉRIEUR

(30) Priority: 29.03.2019 US 201962826089 P
(43) Date of publication of application: 09.02.2022
(73) Proprietor: ARKEMA FRANCE, 92700 Colombes (FR)
(72) Inventor: CALVIN, Mary, K., Havertown, PA 19083 (US); FISHER, Evan, J., Malvern, PA 19355 (US); AUBART, Mark, A., Chester, PA 19380 (US); WANG, Jing-Han, (Helen), King of Prussia, PA 19406 (US); LIU, David, Shen-Ren, Bala Cynwyd, PA 19004 (US)
(74) Representative: Arkema Patent
(86) International application number: PCT/US2020/025351
(87) International publication number: WO 2020/205568

(56) References cited:
- WO-A1-2017/210286
- WO-A1-2018/162268
- WO-A2-2015/080888
- CN-A- 108 527 868
- US-A1- 2016 039 194
- US-A1- 2018 065 294

## Description

### FIELD OF THE INVENTION

The invention relates a material extrusion additive manufacturing method for producing a clear, internally transparent part composed of amorphous thermoplastic polymer layers at least 0.1 mm thick. The invention also relates to internally clear parts made by the method, having an internal haze of less than 25%, less than 15%, less than 10% and even less than 5%. The method creates a printed dot or line of amorphous thermoplastic polymer that remains at a high internal temperature for a long enough period of time to allow the polymer chains in each layer to be mobile and fluid, permitting sufficient inter-layer chain entanglements to reduce and eliminate layer lines. With a nearly 100% dense final part, voids are eliminated. The resultant printed article has a very high internal clarity, and can have a haze of less than 5%.

### BACKGROUND OF THE INVENTION

Equipment advances and reductions in pricing have allowed 3-D printing to become widely adopted in homes, schools, and industry as a fast, simple, and often cheaper way to prototype and make custom end use parts. Specifically, material extrusion additive manufacturing 3-D printing (also known as fused filament fabrication or fused deposition modeling), has emerged as a tool of choice for direct consumer use, larger scale production, and quick thermoplastic prototyping as it is the easiest to operate and it produces the least waste and shortest turnaround time of the 3-D printing technologies.

Many materials have been used to produce 3-D printed articles for a wide variety of end uses, from chocolate to collagen. Thermoplastic materials are especially well adapted for use with material additive extrusion printers. Unfortunately, there have been few thermoplastics available that provide good mechanical properties, transparency, and ease of print.

Polylactic acid (PLA) is widely used for desktop home printers as it prints well, and has very low warpage. Unfortunately, it has a low use temperature and poor chemical stability; also it yellows (degrades) during printing when not colored with dyes or pigments. Acrylonitrile butadiene styrene (ABS) is a more stable, commonly used "engineering" thermoplastic for 3-D printing, and has a higher use temperature - but it exhibits higher warpage during printing, is not transparent, and has a printed elongation at break of less than 6%. Polyethylene terephthalate glycol (PETG) and other copolyesters have been a very popular addition to the 3-D printing space with its higher use temp and stability like ABS, and improved printability - but it has a lower hardness and scratch resistance.

Acrylic polymers are well known for their clarity, sparkling color, surface gloss, depth of image, and weather resistance. They have similar use temperatures to ABS. Unfortunately, the brittleness associated with acrylic polymers makes them impractical for making filaments for use in extrusion additive 3-D printing.

The ability to 3D print transparent parts with thermoplastics has been a goal of the 3D printing community for a long time. However, despite using transparent materials, the act of the material extrusion style 3D printing typically adds numerous polymer layer-air and/or polymer line-air interfaces that then make the printed part hazy and not transparent. Layer/line interfaces on external surface can be reduced by surface polishing or coating, but internal layer/line interfaces are not easily removable.

Recently it has been reported that "transparent" parts have been 3D printed with ABS, copolyesters, and PETG filaments. Typically the parts are quite small and exhibit yellowing, bubbles, or cloudiness. In addition, the parts are typically printed with very low layer heights (0.05mm) at a slow speed, so the part takes a very long time to be produced. At thicker layer heights or faster speeds, the resulting part no longer appears transparent. There has also been no prior demonstration with acrylic filaments, likely due to the difficulty in processing conventional acrylic filaments in a material extrusion style 3D printer.

There is a need to 3D print transparent articles at a practical layer height of at least 0.1 mm while maintaining an extrusion speed of at least 15mm/s. It is preferable to increase layer height to shorten print times, as extrusion speeds greater than 50mm/s tend to cause very inaccurate prints. Surprisingly, it has now been found that with the proper selection of composition, Tg, additives, and optimized printing processing conditions (minimal fan/active cooling, build plate temperature and build chamber coordinated with the material's transition temperature, and set layer heights) internally transparent polymer parts may be produced with haze less than 20%, preferably less than 15%, preferably less than 10%, and as low as less than 5% at normal layer heights without slowing down the print speed. The material and printing conditions are selected so that each printed polymer dot is allowed to remain at a temperature of at least 25°C, and more preferably of 45°C, 55°C, and even higher above the material Tg for at least 10, 15 and even 20 minutes, to allow the polymer to be mobile and fluid, resulting in layer inter-entanglement of polymer chains, reducing and even eliminating layer lines and bubbles, to provide a very high internal clarity of even less than 10% and 5% haze.

In addition to the high clarity provided in the 3D printed part due to intermingling of different layers, the same intermingling increases the Z direction strength in a 3D printed article, and produces a part with minimized internal stress. In addition, by producing a part without any internal layer lines or defects, the part is also better suited even for non-clear applications, such as light diffusers and mechanically demanding parts. In such parts, color transmission is also improved.

CN 108 527 868 A discloses a material extrusion additive manufacturing process using an amorphous thermoplastic polymer composition (polycarbonate), wherein the finished article is heat-treated to increase transparency.

### SUMMARY OF THE INVENTION

The invention relates to an additive manufacturing material extrusion printing process, having the steps of
a) selecting an amorphous thermoplastic polymer matrix composition, said composition as a whole having a certain Tg,
b) selecting conditions sufficient to provide an internal temperature of the composition, wherein the Tg of the composition as a whole is at least 20°C, more preferably at least 30°C, more preferably at least 40°C, even at least 50°C and even 60°C below the internal temperature,
c) 3D printing said amorphous thermoplastic polymer to form an article,
wherein the difference in temperature between the amorphous thermoplastic polymer Tg and the internal temperature remains for at least 5 minutes, preferably at least 10 minutes, more preferably at least 15 minutes, and most preferably at least 20 minutes following printing.

In a second aspect of the invention, the material extrusion process involves the selection of conditions to provide the desired internal temperature, selected from one or more of the following:
a) selection of a build plate temperature above the amorphous thermoplastic polymer composition Tg, more preferably at least 10°C, and most preferably at least 20°C above the Tg of the amorphous thermoplastic polymer composition. In another embodiment, the build plate temperature could also be given as a % above the Tg of the amorphous thermoplastic polymer composition - being at least 10% higher than the amorphous thermoplastic polymer composition, preferably from 10 to 50% greater, more preferably at least 20% greater, and more preferably at least 30% greater, and even more than 40% greater than the amorphous thermoplastic polymer Tg;
b) selection of a heated chamber temperature of at least 20°C, preferably at least 30°C, preferably at least 40°C, and most preferably at least 50°C greater than the Tg of the composition;
c) use of a radiant heating source to supplement the heat at the point of printing;
d) little or no fan or active cooling;
e) print speed of 25mm/s;
f) use of selected additives in the composition to lower the Tg of the composition, or to help maintain the temperature of the composition for an increased period of time.

In a third aspect of the invention the additive manufacturing process of any of the previous aspects the amorphous thermoplastic polymer composition comprises a polymer selected from the group including but not limited to a (meth)acrylic polymer, co-polyester, polycarbonate, polyamide, polyhydroxyalkanoates, amorphous polyamide, and poly(styrene-co-maleic anhydride).

In a fourth aspect of the invention, the additive manufacturing process of any of the previous aspects, involves an amorphous thermoplastic polymer composition with a Tg of less than 160°C , preferably less than 150°C, preferably less than 140°C, preferably less than 130°C, preferably less than120°C, preferably less than 114°C, preferably less than 104°C, preferably less than 94°C, more preferably less than 80°C, and most preferably less than 75°C.

In a fifth aspect of the invention, the additive manufacturing process of any of the previous aspects, wherein said amorphous thermoplastic polymer composition is selected from the group consisting of:
a) a copolymer having the requisite Tg,
b) a blend of a polymer having a Tg of greater than 140°C and a low viscosity polymer,
c) a blend of a polymer having a Tg of greater than 140°C, and an additive capable of lowering the Tg, or increasing the open time of the polymer composition, whereby open time is the time to allow successive molten polymer lines to merge and/or entangle.

In a sixth aspect of the invention, the additive manufacturing process of any of the previous aspects, uses an amorphous thermoplastic polymer composition that further comprises impact modifiers at a level of 5 to 60 weight percent, based on the weight of the total composition.

In a seventh aspect of the invention, the additive manufacturing process of any of the previous aspects, the amorphous thermoplastic polymer composition temperature is provided and/or maintained by one or more means selected from the group consisting of: a) low or no fan or active cooling, b) a heated build plate, c) a heated chamber, and d) a radiant heat source.

In an eighth aspect of the invention, the additive manufacturing process of any of the previous aspects, produces a 3D printed article with a fill density of 99% or greater.

In a ninth aspect of the invention, the additive manufacturing process of any of the previous aspects involves an amorphous thermoplastic polymer composition that is an acrylic polymer.

In a tenth aspect of the invention, in the additive manufacturing process of any of the previous aspects, the amorphous thermoplastic polymer composition is printed at a layer height of ≥ 0.05 mm, ≥ 0.1 mm, ≥ 0.2 mm, ≥ 0.3 mm, ≥ 0.4 mm.

In another aspect of the invention, an internally clear 3-D printed article is formed, where the article printed using a deposited layer thickness of greater than or equal to 0.1 mm, preferably greater than or equal to 0.2 mm, preferably greater than or equal to 0.3 mm, preferably greater than or equal to 0.4 mm, and wherein the internal haze is less than 25%, preferably less than 20%, preferably less than 10%, and preferably less than 5%.

In another aspect of the invention, the 3D printed article comprises an acrylic composition, a co-polyester, an amorphous polyamide, or a polycarbonate.

### BRIEF DESCRIPTION OF THE DRAWINGS

Figure 1: Shows a schematic of the test used in Example 1.
Figures 2 and 3: IR images from Example 3.
Figures 4 and 5: displays the dual extruded block of Example 4.
Figures 6-11 show rheology curves of Samples from Example 1.
Figures 12 and 13 are thermal images of parts from Example 6.

### DETAILED DESCRIPTION OF THE INVENTION

The invention relates to a method for producing a clear, internally transparent part from an amorphous thermoplastic polymer composed of layers at least 0.1 mm thick. The invention also relates to internally clear parts made by the method, having an internal haze of less than 25%, less than 15%, less than 10% and even less than 5%.

As used herein, unless otherwise described, percent shall mean weight percent. Molecular weight is a weight average molecular weight as measured by GPC. In cases where the polymer contains some cross-linking, and GPC cannot be applied due to an insoluble polymer fraction, soluble fraction / gel fraction or soluble faction molecular weight after extraction from gel is used.

"Copolymer" is used to mean a polymer having two or more different monomer units. "Polymer" is used to mean both homopolymer and copolymers. Polymers may be straight chain, branched, star, comb, block, or any other structure. The polymers may be homogeneous, heterogeneous, and may have a gradient distribution of co-monomer units.

By (meth)acrylic, or (meth)acrylate is meant both methacrylic and acrylic, or methacrylate and acrylate.

Tg is used as a surrogate measure of the transition temperature, the temperature where the material goes from being liquid-like to solid-like as seen by rheology. By the transition temperature is meant the point where the log of viscosity vs. temperature changes slope following the Arrhenius equation from liquid-like to solid-like behavior. This transition point can be obtained by measuring the viscosity vs. temperature of the material at low shear going from melt phase to room temperature. A transition temperature that is 10 °C lower than the internal temperature of the part reaches during printing (roughly 135 °C when printed onto a 120°C heated build plate with no heated chamber and minimal fan) is desired, preferably 20°C lower, even more preferably 25 °C lower, 30°C lower. The Tg of many acrylic materials is roughly 25°C lower than the transition temperature. In other words, a Tg of below 104°C, 94°C, 84C, and 75°C and yet above 60°C is preferred for a material printed at room temp on a 120°C heated build plate. If a heated chamber is used, the part will experience a higher internal temperature and thus a higher Tg material can also be used and similarly if a hotter heated build plate is used, a higher Tg material can also be used. The glass transition temperature of a polymer, is measured by DSC according to the standard ASTM E1356.

First G'/G" crossover temperature refers to the first temperature when G' is greater than G" as measured by parallel plate rheology as low shear of a material as it goes from melt to room temperature where the storage modulus G', i.e. the elastic response is greater than the loss modulus G", i.e. the viscous response. Generally speaking, the dynamic moduli are a measure of the viscoelastic properties of the material, being the storage modulus G', i.e. the elastic response, and the loss modulus G", i.e. the viscous response of the polymer. The crossover temperature (G'=G") can be taken as the onset of stiffening because the elastic modulus at lower temperature is dominating the viscous response. Without being bound to any theory, it is believed a higher first G7G" crossover temperature would allow a material to better hold its shape when being heat-soaked.

The transparency processing range is defined as the difference in temperature between the first G'/G" crossover temperature and the L-S transition temperature. Characterizing this window as a reference for transparent printing is particularly useful when the Tg of the printing material does not serve as a straightforward proxy for transition temperature and/or it cannot be compositionally manipulated to serve as a surrogate.

By additive manufacturing or additive manufacturing process, as used herein, is meant melt extrusion printing or deposition of melted thermoplastic. The process is also known as 3D printing.

The transmission and haze are measured according to ASTM D1003 with a BYK-Gardner Haze-Gard machine.

There are several factors that can be selected to provide the material properties, open time, and internal environmental conditions to allow the polymer chains in each print layer dot/line, to interact and entangled with the polymer chains in adjacent printed dots. These will be discussed below:

### Material composition

In order to obtain a lower Tg total composition, one could a) choose a polymer or copolymer having the desired Tg, b) blend a higher Tg polymer with a compatible low Tg, lower viscosity, or c) blend a higher Tg polymer with an additive, such as a plasticizer.

### Polymer matrix

The polymer matrix of the invention is an amorphous polymer. Semi-crystalline and crystalline polymers contain crystalline regions that are known to diffract light result in increased haze. Useful polymers of the invention include, but are not limited to (meth)acrylics, copolyesters, polycarbonate and amorphous polyamides. The present invention is exemplified using (meth) acrylic polymers and amorphous polyamides, but one of ordinary skill in the art would be able to apply the invention to other amorphous polymers, using the description and examples provided herein. While the matrix polymer is preferably a single polymer with a single Tg, it is possible to use a polymer blend or even a block copolymer, having two or more Tgs. In the case of the matrix having more than one polymer or block, with more than one Tg, the lower Tg will be referred to herein as the Tg of the matrix polymer. It should be noted that this refers to the polymer matrix, and not to other polymer additives, such as impact modifiers, that could also be present in the composition. The matrix polymer is the continuous phase of the composition.

"Acrylic polymer", as used herein is meant to include polymers, copolymers, and terpolymers formed from alkyl methacrylate and alkyl acrylate monomers, and mixtures thereof. The alkyl methacrylate monomer is preferably methyl methacrylate, which may make up from 50 to 100 percent of the monomer mixture. 0 to 50 percent of other acrylate and methacrylate monomers or other ethylenically unsaturated monomers, including but not limited to, styrene, alpha methyl styrene, acrylonitrile, and crosslinkers at low levels may also be present in the monomer mixture. Other methacrylate and acrylate monomers useful in the monomer mixture include, but are not limited to, methyl acrylate, ethyl acrylate and ethyl methacrylate, butyl acrylate and butyl methacrylate, iso-octyl methacrylate and acrylate, n-octyl acrylate, lauryl acrylate and lauryl methacrylate, stearyl acrylate and stearyl methacrylate, isobornyl acrylate and methacrylate, methoxy ethyl acrylate and methacrylate, 2-ethoxy ethyl acrylate and methacrylate, isodecyl acrylate and methacrylate, tertiobutyl cyclohexyl acrylate and methacrylate, tertiobutyl cyclohexanol methacrylate, trimethyl cyclohexyl acrylate and methacrylate, methoxy polyethylene glycol methacrylate and acrylate with 2-11 ethylene glycol units, penoxyethyl acrylate and methacrylate, alkoxylated phenol acrylate, ethoxylated phenyl acrylate and methacrylate, epoxypropyl methacrylate, tetrahydrofurfuryl acrylate and methacrylate, alkoxylated tetrahydrofurfuryl acrylate, cyclic trimethylolpropane formal acrylate, carprolactone acrylate, dimethylamino ethyl acrylate and methacrylate monomers. Alkyl (meth) acrylic acids such as methacrylic acid and acrylic acid or C1-C8 esters thereof can be useful for the monomer mixture. Most preferably the acrylic polymer is a copolymer having 70 - 99.5 weight percent of methyl methacrylate units and from 0.5 to 30 weight percent of one or more C1-8 straight or branched alkyl acrylate units.

The acrylic polymer has a weight average molecular weight of from 50,000 g/mol to 500,000 g/mol, preferably from 55,000g/mol to 300,000 g/mol, and preferably from 75,000 g/mol to 200,000 g/mol. It has been found that the use of acrylics having a lower weight average molecular weight in the range, provides an increase in the density of material extrusion additive printed articles, increases the transparency, and reduces warpage.

Preferably, the acrylic polymer contains little or no very high molecular weight fraction polymer, with less than 5 weight percent of the acrylic polymer, and preferably less than 2 weight percent of the acrylic polymer having a molecular weight of greater than 500,000 g/mol.

In another embodiment, the acrylic polymer comprises a blend of two or more of the polymers described in the above two embodiments.

The acrylic polymer can be formed by any known means, including but not limited to bulk polymerization, emulsion polymerization, solution polymerization and suspension polymerization.

### Acrylic Copolymers:

The acrylic copolymers of the invention, have a Tg below 160°C, preferably below 150 °C, preferably below 140°C, preferably below 130°C, preferably below 120°C, preferably below 114°C, preferably below 104 °C ,preferably below 95°C, preferably below 85°C, and more preferably below 75°C and Tg above 50°C, preferably above 55°C, and more preferably above 60°C.

In one preferred embodiment, at least 40 weight percent, preferably at least 50 weight percent, and most preferably at least 60 weight percent of the monomer units in the acrylic copolymer are methylmethacrylate monomer units. The co-monomers selected for the acrylic copolymer could be (meth)acrylic monomers, non-(meth)acrylic monomers, or mixtures thereof.

In one preferred embodiment, the acrylic copolymer is composed of greater than 90 weight percent, greater than 95 weight percent, and most preferably 100 weight percent acrylic monomers units. Low Tg acrylic monomers that can be copolymerized to lower the copolymer Tg to the specified level include, but are not limited to methyl acrylate, ethyl acrylate, butyl acrylate, ethylhexyl acrylate, hydroxyl ethyl acrylate, hydroxyl propyl acrylate, hydroxyl butyl acrylate, hexyl methacrylate, n-octyl acrylate, lauryl methacrylate, and butyl methacrylate. These monomers are added at levels high enough to lower the Tg below 95°C, 85°C, preferably below 80°C and more preferably below 75°C, the Tg being easily calculated using the Fox equation, as is well known in the art and can be measured by DSC. For example, a 70 wt% methyl methacrylate (MMA)/30 wt% ethyl acrylate composition has a Tg of about 75°C.

The lower Tg copolymers tend to have a lower viscosity than higher Tg polymers, though other factors like molecular weight and branching will also affect viscosity. Impact modifiers, can be, and are preferably added to the composition to both improve the impact strength and also increase the melt flow viscosity.

While the acrylic compositions of the invention may contain no impact modifier, in a preferred embodiment, and to avoid being too fragile, the acrylic composition of the invention includes one or more types of impact modifiers. Preferably the acrylic composition contains impact modifiers at a level of from 5 to 60 weight percent, preferably 9 to 40 weight percent, and more preferably from 20 to 35 weight percent, based on the overall composition. The impact modifiers can be any impact modifier that is compatible, miscible, or semi-miscible with the acrylic composition, as known in the art. Useful impact modifiers include, but are not limited to linear block copolymers and both soft-core and hard-core core-shell impact modifiers. In a preferred embodiment, the impact modifiers have acrylic blocks, or acrylic shells.

While not being bound by any particular theory, it is believed that the impact modifier provides elongation, flexibility, and toughness.

In a preferred embodiment, the impact modifier of the invention is a multi-stage, sequentially-produced polymer having a core/shell particle structure of at least three layers made of a hard core layer, one or more intermediate elastomeric layers, and a hard shell layer. The presence of a hard core layer provides a desirable balance of good impact strength, high modulus, and excellent UV resistance, not achieved with a core/shell modifier that possesses a soft-core layer.

The hard core layer (Tg > 0°C, preferably Tg > 20 °C) is typically a single composition polymer, but can also include the combination of a small amount of a low Tg seed on which the hard core layer is formed. The hard core layer can be chosen from any thermoplastic meeting the Tg requirements. Preferably, the hard core layer is composed primarily of methacrylate ester units, acrylate ester units, styrenic units, or a mixture thereof. Preferably the acrylate ester units are chosen from methyl acrylate, ethyl acrylate, n-butyl acrylate, 2-ethylhexyl acrylate and octyl acrylate. Styrenic units include styrene, and derivatives thereof such as, but not limited to, alphamethyl styrene, and para methyl styrene. In one embodiment the hard-core layer is all-acrylic.

The intermediate layer or layers are elastomeric, having a Tg of less than 0°C, and preferably less than -20°C. Preferred elastomers include polymers and copolymers of alkyl acrylates, dienes, styrenics, and mixtures thereof. Preferably the soft intermediate layer is composed mainly of acrylate ester units. The shell layer can be made of one or more shell layers, having a Tg > 0°C, more preferably Tg > 20 °C. The shell layer may be the same or different composition from the hard core layer.

Preferably the multi-stage polymer is a three stage composition wherein the stages are present in ranges of 10 to 40 percent by weight, preferably 10 to 20 percent, of the first stage (a), 40 to 70 percent, preferably 50 to 60, of the second intermediate stage (b), and 10 to 50 percent, preferably 20 to 40, of the final stage (c), all percentages based on the total weight of the three-stage polymer particle.

In one embodiment the core layer is a crosslinked polymethylmethacrylate - ethylacrylate copolymer, the middle layer is a crosslinked polybutylacrylate-styrene copolymer, and the outer shell is a polymethylmethacrylate-ethylacrylate copolymer.

The multi-stage polymer can be produced by any known technique for preparing multiple-stage, sequentially-produced polymers, for example, by emulsion polymerizing a subsequent stage mixture of monomers in the presence of a previously formed polymeric product. In this specification, the term "sequentially emulsion polymerized" or "sequentially emulsion produced" refers to polymers which are prepared in aqueous dispersion or emulsion and in which successive monomer charges are polymerized onto or in the presence of a preformed latex prepared by the polymerization of a prior monomer charge and stage. In this type of polymerization, the succeeding stage is attached to and intimately associated with the preceding stage.

In a preferred embodiment the refractive index of the core/shell particle matches the total refractive index of the matrix made of the acrylic polymer composition. By match is meant that the refractive index of the core/shell particle should be within 0.03 units of the matrix polymer, and preferably within 0.02 units.

In one preferred embodiment, the impact modifier is selected to have a minimal effect on increasing the viscosity of the low Tg acrylic composition. Higher efficiency impact modifiers with a high rubber content allow for a lower loading, and therefore less effect on increasing the composition viscosity. Nanostrength^{®} block copolymers from Arkema which self-assemble, also have lees of a detrimental effect on the viscosity of the composition.

### Acrylic Alloys

An alternative means for providing an overall lower Tg acrylic composition involves alloy blends of one or more higher Tg acrylic polymer(s) with one or more lower Tg (lower melt flow) polymers. This method is described in WO 2017/210,286.

The low melt viscosity polymer in the acrylic alloy composition must be compatible, semi-miscible, or miscible with the acrylic polymer. The low melt viscosity polymer and acrylic polymer should be capable of being blended in a ratio such that a single intimate mixture is generated without separation into distinct bulk phases. By "low melt viscosity polymer", as used herein means polymers having a melt flow rate of greater than 10 g/10 minutes, and preferably greater than 25g/10 minutes as measured by ASTM D1238 at 230°C/10.4kg of force.

In one embodiment, the low melt viscosity polymer is a low molecular weight acrylic polymer or copolymer, meeting the high melt flow rate criteria. The low molecular weight acrylic polymer has a weight average molecular weight of less than 70,000, preferably less than 50,000, more preferably less than 45,000, and even less than 30,000 g/mol. Acrylic copolymers are preferred, and copolymers with a Tg of less than 100°C, and less than 90°C are preferred for increased flexibility.

In a preferred embodiment, the low melt viscosity polymer of the invention is a polymer other than an acrylic polymer. The non-acrylic low melt viscosity polymer of this invention includes, but is not limited to, polyesters, cellulosic esters, polyethylene oxide, polypropylene glycol, polyethylene glycol, polypropylene glycol, polyhydroxyalkanoates, styrene-acrylonitrile copolymers, polyvinyl chloride, polyvinyl acetate, polyvinyl alcohol, ethylene-vinyl acetate copolymers, polyvinylidene fluoride and its copolymers, olefin-acrylate copolymers, olefin-acrylate-maleic anhydride copolymers, and maleic anhydride-styrene-vinyl acetate copolymers, and mixtures thereof.

Useful polyesters include, but are not limited to: poly(butylene terephthalate), poly(ethylene terephthalate), polyethylene terephthalate glycol, polylactic acid. A preferred polyester is polylactic acid.

Useful cellulosic esters include, but are not limited to: cellulose acetate, cellulose triacetate, cellulose propionate, cellulose acetate propionate, cellulose acetate butyrate, and cellulose acetate phthalate.

In one embodiment, the low melt viscosity polymer has a weight average molecular weight higher than the entanglement molecular weight of that polymer, as measured by gel permeation chromatography.

The low melt viscosity polymer makes up from 5 to 60 weight percent of the total alloy composition, preferably from 9 to 40 weight percent.

### Acrylic blends with non-polymers

A third method for providing an over-all acrylic composition having a lower Tg is to blend a higher Tg acrylic polymer with one or more compounds known to lower the Tg, such as, but not limited to, plasticizers. The additive compound must be compatible, miscible or semi-miscible with the acrylic polymers. The Tg-lowering additive is typically added at from 2 to 40 weight percent, based on the weight of the acrylic polymer, preferably from 4 to 20 weight percent

In one embodiment, a useful class of plasticizers are specialty epoxides, such as 1,2 dihydroxy alkanes with a molecular weight above 200 grams per mole or vegetable oil polyols having a molecular weight above 200 grams per mole, as described in PCT/US2019/012241.

In another embodiment, phthalates, such as di (2-ethyl hexyl) phthalate, diisononyl phthalate, diisodecyl phthalate, and diisooctyl phthalate, could be used

In another embodiment, adipates, such as, but not limited to di(2-ethyl hexyl) adipate, could be used.

### Viscosity

The polymer composition of the invention has a viscosity at a shear of 1 sec⁻¹ of less than 100,000 Pa-sec, preferably less than 20,000 Pa-sec, and preferably less than 10,000 Pa-sec at a temperature of 230°C, and a viscosity of 20 to 2,000 Pa-s, preferably from 25 to 1,000 Pa-s, and more preferably 30 to 500 Pa-s at a shear rate of 100 sec⁻¹ at a temperature of 230°C, as measured by a rotational viscometer according to ASTM C965. This viscosity is useful for 3D printing the composition, and also provides a composition that is fluid enough at the internal temperature to allow intermingling of the polymer chains in adjoining layers.

Once the composition is printed, the viscosity of the printed dobline of the amorphous thermoplastic polymer composition is maintained at a viscosity at a shear of 1 sec-1 of less than 200,000 Pa-sec, 100,000 Pa-sec, 50,000 Pa-sec, for at least 5, preferably 10, preferably 15, preferably 20, and preferably 25 minutes following printing.

### Printed Part Density

To most effectively remove small gaps that scatter light the final part should have a density of at least 95%, preferably 98% preferably 99% of the bulk density of the polymer as measured by ASTM D792. The high density is accomplished by over-filling the print by 1 to 10 percent, combined with the fluidity of the composition due to the temperature adjustment - providing time and low enough viscosity to enable the removal of any air pockets.

An added benefit to having very high internally dense part and having the internal layer lines merge is the improved mechanical performance in the Z direction. The process of printing internally transparent parts also produces close to isotropic parts.

### Layer Height

The layer height, as known in the art, is the Z-direction thickness of the constituent layers as they are deposited by the extruder in the X-Y direction. Due to the viscosity of the polymer, the deposited traces within the layer have the cross section of a geometric stadium (also known as a discorect angle). The rounded edges of the polymer traces cause inter-raster and interlayer voids that cause light to scatter when passing through the printed object. Furthermore, the rounded outer layers act as small lenses, further scattering light. This scattering of light moderately reduces the transmittance and greatly increases the haze of the printed article (both measured in accordance with ASTM D1003).

It has been shown that at very small layer heights (0.05 mm), it is possible to create a somewhat clear part with FFF printing. Printing at these very small layer heights allows the nozzle to reheat the material and remove any internal voids that would otherwise exist. The exterior part surface must be sanded and polished to appear clear. Unfortunately, small layers cause the print time to increase greatly as a simple 10 cm tall object will require 2,000 individual layers. If this object was a simple 1000 cm cube the individual layers would take around 20 minutes each to print with a print speed of 25mm/s resulting in a final print time of nearly 27 days. The speed at which the layers are deposited cannot be increased without significantly sacrificing fidelity, so the thin layer height causes unacceptably long print times. When the layer height is increased, the clarity of the part decreases substantially. Through a manipulation of process parameters and a modification of the rheology characteristics of the resin, these limitations were able to be overcome allowing clear parts to be printed at layer heights all of the way up to 0.4 mm.

### Print Speed

The main parameter used to control the rate at which the print head moves is usually referred to as the print speed. In a preferred embodiment the print speed would be greater than 10mm/s preferably greater than 15mm/s and most preferably greater than 20mm/s but preferably less than 55 mm/s. Improvements beyond this point will not reduce the print time as greatly as the print speed only controls the maximum speed of the nozzle within the X-Y plane, and the nozzle is limited in both its acceleration and jerk. These limits depend on the printer and its configuration. Furthermore, extrusion speeds greater than 75mm/s tend to be very inaccurate due to the inertia of the fluid polymer as it is deposited.

### Printer Design

For material extrusion additive manufacturing 3-D printing, the printer would generally have a heated build plate of 50 - 150 °C (preferably above 60°C, more preferably above 75°C). The printer would feature one or more heated nozzles through which the material is extruded. These nozzles are generally able to reach 200°C (preferably 250°C, more preferably above 300°C). The printer would feature a build environment open to ambient conditions, or be enclosed. The printer could feature additional controls such as an actively heated or cooled build environment. The printer could feature a radiative heating element within an open or enclosed build volume or a forced convective heating element to increase or maintain internal part temperature.

The printer could feature a mixing head that combines multiple feedstocks, such as the Diamond Hotend, wherein any of the feedstock compositions, or the final composition after mixing meets the specifications described herein. In another embodiment a printer fed with multiple compositions combined within a direct pellet extruder print head wherein any of the compositions or the final mixed composition matches the specifications described herein..

### Print temperature, Internal temperature

The print temperature, or internal temperature, as used herein, is meant to define the temperature of the material composition that is printed even after it has been passed through the printer nozzle and deposited on the build plate. This is also referred to as internal temperature and is not to be confused with nozzle temperature. The material printed will constitute a dot in a printed layer with an associated print temperature that will decrease as the material cools. The internal temperature should be at least 20°C, more preferably at least 30°C, more preferably at least 40°C, even at least 50°C, and even 60°C above the Tg of the printed composition for a specified amount of time after the material has been deposited. The internal temperature can be affected by several factors, including, but not limited to the printer nozzle temperature, the build plate temperature, the environmental temperature that can be ambient, or in a heated chamber, the fan or active cooling speed, and any added radiant or convective energy.

### Nozzle Temperature

Nozzle temperature is easily adjusted. The polymer composition is in contact with the nozzle for only a short duration, and therefore nozzle temperature has a small effect on the internal temperature, especially over time. The nozzle temperature is responsible for adding heat to each layer by the build of each additional layer. The nozzle is generally heated to between 170°C and 300°C, and preferably from 210°C to 240°C. Preferably the nozzle is set at the upper range of the material's processing temperature.

### Build plate Temperature

The build plate helps to keep the internal temperature of the print elevated. The effect of the heated build plate on the part temperature can be observed at 10, 20, 30 and even 40 layers above the plate, as it continually provides heat to the internal portion of the printed article. A heated build plate also helps to decrease any warpage.

The build plate should be set above the Tg of the polymer composition, preferably up to 10°C, and even 20°C, 25°C, and 30°C above the polymer composition Tg. Alternatively, the build plate could be set as a % above the Tg of the composition as measured in degrees Celsius, preferably 10%, 20%, 30%, 40% above the Tg.

The higher build plate temperature surprisingly had the unexpected effect of allowing a transparent parts to be printed while printing with thicker individual layers. At thicker layer heights, all previous methods showed a dramatic increase in optical haze. With the heated build plate set to a temperature well above the material's T_{g} we were able to print 3.2mm thick plaques with layer heights of 0.2mm, 0.3mm, and even 0.4mm with an internal haze of less than 10% (see examples 1 &2).

The higher build plate temperature and lack of cooling fan/active cooling allows the recently printed layers to maintain their temperature and mobility for roughly 6 mm from the topmost layer into the printed surface. At the given print speed, this represents roughly 20 minutes before a given layer cools below a temperature that significantly reduces the fluidity. The increased fluidity caused by the higher internal temperature allows the part to become internally transparent, yet the high first G'/G" crossover temperature, (190 °C) means the material is solidified enough to allow more complicated geometry to be resolved. Essentially, a material composition selected according to the invention is able to maintain enough time in the transparency processing temperature range to provide a transparent part while maintaining good part geometry definition.

### Heated chamber

When a heated chamber is used, the part will cool slower, experience a higher internal temperature and thus a higher Tg material may be used. The chamber temperature should be chosen to be higher than ambient but lower than the Tg of the polymer composition. A chamber temperature of above 30 °C, 40 °C, 50°C, and preferably above 60 °C less can be useful. However, a good, internally transparent part may be 3D printed at ambient temperature, provided the Tg of the composition and build plate temperatures are carefully chosen.

### Radiant energy

In one embodiment, the heat at the point of print can be supplemented by a radiant energy source, such as an infrared heater.

### Part Cooling Fan(s)

To increase the internal temperature of the print the active part cooling system (typically a fan) is turned off or disabled during printing. In the preferred embodiment, this system consists of 1 or more radial or axial fans which have variable speed control. In another embodiment, systems that use a series of valves or ducts to direct airflow can be set such that the airflow is directed away from the printed article. In another embodiment the airflow is pre-heated so that the airflow that interacts with the part being printed does not cause significant cooling, and could potentially actively heat the part. Other forms of forced convective heating instead of cooling may also be considered.

### Layer height

It is known that decreasing the layer print height to 0.05 mm and below can improve the clarity of a printed part. This is primarily due to the increased amount of heat added to each printed layer due to a constant renewal of heat from the nozzle. Unfortunately, the increased printing and heat can also lead to degradation of the polymer and a yellow or brown coloring. In the present invention, layer heights of 0.1 mm, 0.2 mm, 0.3 mm and even 0.4 mm can be used to print parts, while still achieving an internal haze of less than 15%, less than 10% and even less than 5%.

### Time

A key parameter in achieving the excellent clarity of a printed article, is that the high positive delta T (the printed material temperature minus the Tg of the material) is maintained for a period longer than 5 minutes, preferably at least 10 minutes, at least 15 minutes and more preferably at least 20 minutes. This longer time frame, at a high temperature above the material Tg, provides the polymer chains the time and fluidity to intermingle with adjoining polymer chains, and thus reduce or eliminate any print lines in the article.

The long delta temperature time is provided by the large positive initial delta T, a fill density of nearly 100%, and a build plate and chamber temperature for reduced heat dissipation from the article.

In one embodiment, a phase change material, such as a phase change polymer can be added at low level, to help maintain the temperature of the print.

### Material Extrusion Additive Process

The amorphous thermoplastic polymer composition of the invention is used as a powder or pellets, and in a preferred embodiment is formed into a filament, generally by an extrusion process.

The composition will be 3-D printed in a material extrusion (fused deposition modeling, fused filament fabrication) style 3-D printer with or without filaments (any size diameter, including 1.75mm, 2.85mm or other sizes) and with any sized nozzle at any speed that can use filaments, pellets, powders or other forms of the acrylic composition.. The 3-D printing of this invention is not a laser sintering process. The compositions can made into filaments for such purposes. They could potentially be even sprayed-nozzled onto the surface (sprayed melted plastic) to be printed, such as by the Arburg Freeformer technology.

A general description of the printing process would involve the following steps: Feeding the polymer composition filament, pellets, or powder into the material extrusion printer. The computer controls of the printer will be set to provide a set volume flow of material, and to space the printed lines at a certain spacing. The machine will feed the polymer composition to a heated nozzle at the set speed, the printer moving the nozzle into the proper position for depositing the set amount of polymer composition.

In a preferred embodiment, the polymer has a low shear melt viscosity as described above. The printer would generally have a heated build plate of 50 - 150 °C (preferably above 60 °C, more preferably above 75 °C). The printer would feature one or more heated nozzles through which the material is extruded. The printer could feature a build environment open to ambient conditions, or be enclosed.

In one preferred embodiment, the 3-D printer is programmed to operate at a slight overflow of 1% to 10% overflow (also known as overfill). This means that the volume of the polymer composition fed by the printer is higher than the calculated volume required for the 3-D article being formed. The overflow packs the acrylic composition closer together, increasing the part density while increasing the strength, mechanical, and optical properties of the printed article. The overflow can be set by two different means. In the first method, the software is set to feed a higher percent of material into the nozzle than would be normally needed. In the second method, the software would be set to decrease the spacing between lines, and thus create an overlap in the lines, resulting in extra material being printed into the article.

Process parameters of the 3-D printer can be adjusted to minimize shrinkage and warpage, and to produce 3-D printed parts having optimum strength and elongation. The use of selected process parameters applies to any extrusion/melt 3-D printer, and preferably to filament printing.

Other process conditions that can improve the open time of the printed article, resulting in excellent clarity and Z direction physical properties include raising the temperature of the build plate and/or build chamber of the printer. It is believed that for best results, the internal temperature of the print should be at least 25 °C, more preferably at least 35 °C, more preferably at least 45 °C, more preferably at least 55 °C and even 65 °C or 75 °C above the material Tg, above the Tg of the polymer composition. In a preferred embodiment, the outer shell of the printed article needs to be stiff enough, and cool down fast enough for some part resolution, while the internal temperature is as high as can be.

### Transparent Material extrusion additive process:

In one embodiment, the 3-D printer is programmed to move the extrusion nozzle at a slightly slower than normal print speed (25 mm/s) with the part-cooling fan off to allow the part retain more heat. The 3D printer is set to extrude very thin layers of layer height 0.05mm. The 3-D printer will operate at a slight overflow of 1% to 10% overflow to allow the voids between the layers to be filled. The build plate is set near or slightly above the Tg of the material and the nozzle is set at the upper range of the material's processing temperature. We were able to demonstrate that a low Tg acrylic can achieve internal transparency when using this method (with a heated build plate at only 85 C). Surprisingly, when measuring transparency and haze according to ASTM D1003 on a 3.2 mm thick plaque with BYK-Gardner Haze-Gard an acrylic material was the only material able to achieve less than 20% haze, preferably 15%, 10%, most preferred 5% and greater than 84% transmission, 86%, 88%, 89%. This held true even at layer heights of 0.1mm.

In another embodiment, the heated build plate temperature can be increased beyond the Tg of the material to further slow the cooling rate of the extruded plastic and allow it to stay above its liquid solid transition point for a longer period of time. One would expect that increasing the build surface temperature well beyond the Tg of the material would cause it to droop and deform; but, surprisingly, it has been found that acrylic materials of this invention were able to hold their shape during the printing process with the build plate temperature more than 40°C beyond the material's Tg. While not being bound by any particular theory, it is believed that the acrylic is able to be soft but still hold its shape because of the large delta, hereby referred as the transparency processing range, between the first G'/G" crossover point and the L-S transition on the rheology curve discussed herein. In one embodiment, through use of an IR thermal camera, it was shown that the interior of the part was 50°C above the Tg of the material, but the part retains its shape as the internal temperature falls below the first crossover point. Higher build plate temperature resulted in improved part transparency. A larger transparency processing range allows for higher build plate temperatures to be used without the part losing its shape and thus a larger transparency processing range is desirable, preferably greater than 40°C, 50°C, 60°C, 70°C and 80°C.

The higher build plate temperature had the unexpected effect of removing the requirement of printing very thin layers/minimized layer heights. Surprisingly, 3.2 mm plaques printed at 25 mm/sec with layer heights of 0.2 mm, 0.3 mm, and even 0.4 mm layer heights exhibited less than 10% haze. Layer heights of 0.3 mm and 0.4 mm are often reserved for faster, imprecise or very large 3D prints, and yet the with this technique we could generate an internally clear part with minimal layer lines. With 0.4 mm layer times an object can be generated 8 times faster than with one with 0.05mm layers.

### Applications / Uses

Acrylic resins are widely used in applications where the beneficial properties (clarity, weathering, etc) are desired. This 3D printable acrylic material can be used in multiple markets including (but not limited to): automotive, building and construction, capstock, aeronautic, aerospace, photovoltaic, medical, computer-related, telecommunication, and wind energy. These applications include (but are not limited to): exterior paneling, automotive body panels, auto body trim, recreational vehicle body panels or trims, exterior panels for recreational sporting equipment, marine equipment, exterior panels for outdoor lawn, garden and agricultural equipment and exterior paneling for marine, aerospace structures, aircraft, public transportation applications, interior paneling applications, interior automotive trims, components for head and or tail lights on vehicles, lenses, prototyping, display panels, interior panels for marine equipment, interior panels for aerospace and aircraft, interior panels for public transportation applications, and paneling for appliances, furniture, and cabinets, recreational vehicle, sporting equipment, marine, aerospace, decking, railing, siding, window and door profiles, dishwasher and dryers, refrigerator and freezers, appliance housing or doors, bathtubs, shower stalls, spas, counters, and storage facilities, decorative exterior trim, molding side trim, quarter panel trim panels, fender and fender extensions, louvers, rear end panels, caps for pickup truck back, rearview mirror housings, accessories for trucks, buses, campers, vans, and mass transit vehicles, b pillar extensions, and the like; appliances and tools such as lawn and garden implements, bathroom fixtures for mobile homes, fencing, components of pleasure boats, exterior components of mobile homes, lawn furniture such as chair and table frames, pipe and pipe end caps, luggage, shower stalls for mobile homes, toilet seats, signs, spas, air conditioner and heat pump components, kitchen housewares, bead molded picnic coolers, picnic trays and jugs, and trash cans; venetian blind components; sporting goods such as sailboards, sailboats; plumbing parts such as lavatory parts and the like; construction components, in addition to those mentioned previously, the additional components including architectural moldings, door molding, louvers, and shutters, mobile home skirting, residential or commercial doors, siding accessories, window cladding, storm window frames, skylight frames, end caps for gutters, awnings, car port roofs, lamp, lighting equipment, sensor, custom carry cash for consumer items, silverware, trim for cars, prototypes, figurines, dentures, hardware, cabinet, ball-joint, hosing, glasses, cage, UV protector screen, window, signage, toys, medical equipment and devices such as implants and equipment components, lighting appliques, luminares, window coverings, surface modification, visualization aids 3D model based on, medical imaging, architectural models, topographic data, mathematical analysis, or other data sets. Education aids, props, costumes, park benches, robotics components, electrical enclosures, 3D printer components, jigs, fixtures, manufacturing aids, molds, sculptures, statues, board games, miniatures, dioramas, trophies, drones, UAV's, medical devices (Class I, Class II, and Class III according to FDA Code of Federal regulations Title 21), light guides, internal lighting, integrated optical components, display components, instrumentation, see through components, solar cells, fixtures and rigging for solar power generating systems, artificial nails, dosimeters, jewelry, footwear, fabric, firearm components, cell phone cases, packaging.

### EXAMPLES

### Example 1 Internal Transparency Plaque Measurements

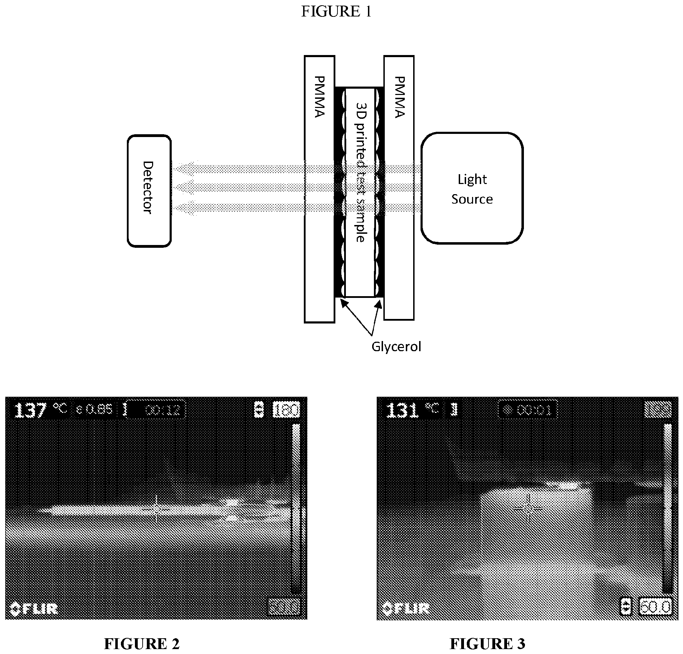

Varieties of different plastic filaments were used to 3D print a 35mm by 35mm plaque that was 3.2mm thick on an Ultimaker S5 3D printer. The transmission and haze for each of these plaques was measured using a BYK-Gardner Haze-Gard. The rough surface of the plaques causes the haze number to be very high, as the ridges scatter light. Rather than manually sanding and polishing the surfaces, a roughly index matched liquid was used to even out the surface. The 3D printed plaques were coated with glycerol (n ≈ 1.45) and then pressed against an acrylic plate and measured. The plaques were measured without glycerol, with glycerol on one side, and with glycerol on both sides. A schematic of our tests can be seen in **Figure 1**. These results are listed in **Table 1.**

The 15-30% ethyl acrylate modified copolymer was able to get the highest transmission and the lowest haze of the materials measured at 3.5%. Without the modified copolymer to lower the Tg and modify the rheology, the medium Tg PMMA was only able to achieve 14% haze under the most ideal conditions. The printer used was limited in the build plate temperatures that could be achieved and did not have a heated chamber, which prevented the internal part temperature from reaching the required temperature of 10°C, 20°C, 30°C above its L-S transition point to have the mobility required to allow the layer interfaces to fully merge. While not being bound by any particular theory, it is believed that had the build plate been set hot enough to allow the internal temperature to reach ~160°C, an impact modified PMMA with Tg ~ 105-110°C could be able to achieve less than 10% and even less than/5% haze.

**TABLE 1**

| | | | | | | As printed (front) | | 2 Acrylic Plates + Glycerol | |
|---|---|---|---|---|---|---|---|---|---|
| ID | Material | Tg (C) | Nozzle Temp (°C) | Build plate Tern p (°C) | Layer Height (mm) | Transm ission | Haze | Transm ission | Haze |
| Sample 1 | Low T_{g} impact modified acrylic composition | 70-75 | 235 | 75 | 0.05 | 89.7 | 61.8 | 89.6 | 3.5 |
| Sample 2 | Med. T_{g} impact modified acrylic composition | 105 - 110 | 250 | 115 | 0.05 | 82.9 | 78.7 | 88.7 | 14.0 |
| Sample 3 | PETG | 78-83 | 235 | 75 | 0.05 | 74.0 | 85.6 | 73.8 | 66.3 |
| Sample 4 | Amphora HT | 100-105 | 265 | 115 | 0.05 | 88.5 | 67.5 | 89.2 | 10.3 |
| Sample 5 | PMMA-PLA alloy | 80-90 | 235 | 75 | 0.05 | 82.0 | 50.8 | 81.6 | 14.6 |
| Sample 6 | Commercial Copolyester | 76-81 | 235 | 75 | 0.05 | 80.5 | 75.7 | 82.6 | 19.6 |
| Sample 7 | Injection Molded PMMA | 110-115 | N/A | N/A | N/A | 93.7 | 0.40 | 92.4 | 0.94 |

### Example 2

### Printing transparent parts at thicker layer heights

An impact modified, low T_{g} acrylic composition comprised of 15 - 30% low Tg comonomer content to was used to print optical plaques at a variety of different layer heights and a printer speed of 25mm/s. These 35mm × 35mm × 3.2mm plaques were tested using the same procedure outlined in Example 1. The optical haze of each these plaques can be seen in Table 2. The plaques printed using layer heights of 0.05 mm and 0.1 mm feature low haze, but once the layer height increases to 0.2 mm the haze increases to 37.9%. This layer height limitation is a significant draw back as 0.2 mm layers are considered standard in the art, and the 0.1 mm and 0.05 mm layers double and quadruple the amount of time it takes to print the object respectively.

**TABLE 2**

| Low Tg Acrylic with impact modifier (Sample 1) | | | | |
|---|---|---|---|---|
| Material Tg | Build Plate Temperature | Layer Height | Print Time (minutes) | Haze (%) |
| 70-75°C | 75°C | 0.05 mm | 162 min. | 3.5 |
| 70-75°C | 75°C | 0.1 mm | 79 min. | 5.4 |
| 70-75°C | 75°C | 0.2 mm | 42 min. | 37.9 |

In order to decrease the print time, while maintaining a low haze, the build plate temperature was increased to 120 °C. Surprisingly, the specific rheological characteristics of the acrylic composition allowed it to maintain its shape despite being heated well past its Tg. The extra mobility of the polymer while still maintaining dimensional stability allowed the voids to be filled even when printing in thick layers. By increasing the build plate temperature from 75°C to 120°C, the haze of the finished part, when printed using a layer height of 0.2 mm, decreased from 37.9% to 8.6%. Plaques printed using layer heights of 0.3 mm and 0.4 mm exhibited even better performance than the plaque printed at 0.2 mm layer height. Using a layer height of 0.4 mm at a print speed of 25mm/s, the plaque was printed in only 22 minutes, but has similar optical performance to plaques that took several hours to generate at lower build plate temperatures and using smaller layer heights.

**TABLE 3**

| Low T_{g} Acrylic with impact modifier (Sample 1) | | | | |
|---|---|---|---|---|
| Material Tg | Build Plate Temperature | Layer Height | Print Time (minutes) | Haze (%) |
| 70-75°C | 120°C | 0.2mm | 42min. | 8.55 |
| 70-75°C | 120°C | 0.3mm | 29min. | 7.36 |
| 70-75°C | 120°C | 0.4mm | 22min. | 5.53 |

An impact modified PMMA with a T_{g} between 105-110°C was also tested (Table 4). Despite having a somewhat low haze of 14.0% when printed with 0.05mm layer height in example 1, the material was not able print clear using thicker layer heights. The printer used was only able to reach a build plate temperature of 120°C, with internal temperature reaching 10-15°C above its T_{g} after 10 to 15 minutes. While not being bound by any particular theory, this level of heat soaking was not adequate to allow the material to print with a low haze at thicker layer heights, but it is believed that if a higher internal temperature could be reached via a hotter build plate or heated chamber, it would be possible to print this acrylic composition with a low haze at 0.2mm and higher, as seen with the lower T_{g} acrylic composition.

**Table 4**

| Medium T_{g} PMMA with impact modifier (Sample 2) | | | | |
|---|---|---|---|---|
| Material Tg | Build Plate Temperature | Layer Height | Print Time (minutes) | Haze (%) |
| 105-110°C | 120°C | 0.2mm | 42min. | 60.1 |
| 105-110°C | 120°C | 0.3mm | 29min. | 76.7 |
| 105-110°C | 120°C | 0.4mm | 22min. | 85.2 |

The Amphora HT copolyester (Table 5) shared the same properties at the standard T_{g} PMMA: It featured a low haze when printed with 0.05mm layers, but the level of heat soaking that could be achieved on our printer was inadequate to allow the material to print clear at thicker layer heights. The Amphora HT had a less drastic increase in haze as layer height increased due to the materials lower T_{g} relative to the medium T_{g} PMMA composition.

**Table 5**

| Amphora HT (Sample 4) | | | | |
|---|---|---|---|---|
| Material Tg | Build Plate Temperature | Layer Height | Print Time (minutes) | Haze (%) |
| 95-105°C | 120°C | 0.2mm | 42min. | 28.2 |
| 95-105°C | 120°C | 0.3mm | 29min. | 44.2 |
| 95-105°C | 120°C | 0.4mm | 22min. | 29.0 |

PETG was also tested, and despite its similar thermal characteristics to the low T_{g} acrylic composition, the polymer was not able to be print at higher build plate temperatures due to the too low viscosity at low shear at elevated temperatures, specifically it has a transparency processing window of only 35°C with a G'/G" first cross over temperature of 122 C and a L-S transition temp of ~ 87°C. The material droops/flows while the print is happening, and the plaque loses its shape. The resulting haze is increased by this deformation as the fluid polymer vacates the original print volume leaving internal voids.

Some of the polymers that have good optical properties, such as polycarbonate have, T_{g}'s in the 100-140 °C range. While not being bound by any particular theory, is believed that with a printer that could reach its build pate temperatures to greater than 5%, 10%, 15%, or 20% of their T_{g}, they too could print clear at thicker layer heights, provided that these materials have the proper rheological characteristics discussed earlier.

### Example 3

### IR thermal imaging of part during printing

While using the outlined method to print transparent parts, a Flir E60 IR thermal camera recorded images of the printing process of sample 1 with a build plate of 120°C. These images established that the internal part temperature can be held well above the Tg of the material, but the material is still able to maintain its shape. The thermal image shown in figure **2** shows a part that measures 110mm×20mm that is 3mm tall at the time the image was taken. The build plate was at 120°C and the nozzle was at 245°C. The temperature at the measurement point in the center of the screen is 137C. The entire part maintains an internal temperature that is above 130°C, but the part is able to maintain its shape over the 5-hour long printing process after which the final part height is 20mm.

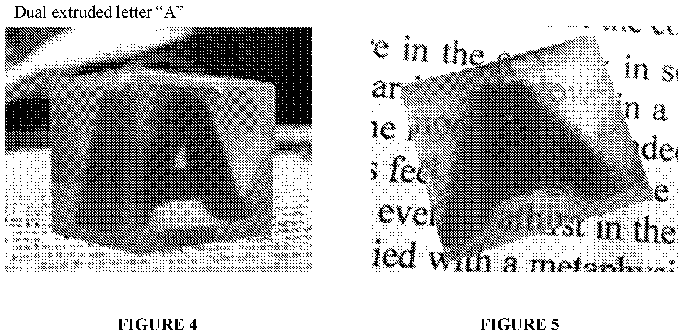

The second IR image shown in figure **3** shows a part that is 20mm by 30mm and 19mm tall at the time of printing. The final part can be seen in figures **4** and **5** in example 4. The thermal image shows the heat soak at the top of the part. The higher build plate temperature and lack of cooling fan allow the recently printed layers to maintain their temperature and mobility for roughly 6 mm from the topmost layer into the printed surface. At the given print speed, this represents roughly 20 minutes before a given layer cools below 130°C. The increased fluidity caused by the higher internal temperature allows the part to become internally transparent, yet the high first cross-over temp (190°C) means the material is solidified enough to allow more complicated geometry to be resolved.

### Example 4

The block shown in Figures 4 and 5 was printed with two filaments. The transparent filament was the same composition as sample 1 mentioned in examples 1 and 2. An opaque, red ABS filament was used to make the internal "A" shape. These two filaments were extruded together by an Ultimaker S5. The object was printed with 0,3mm mm layers. The layer ridges can be seen in the ABS letter but in the acrylic section, the layer interfaces have been eliminated through the process outlined above. The block is clear enough to read text through its 20mm width. The block was finisher using an Edge Finisher Company Model EF-200 to create a flat and clear surface.

The dual extruded block demonstrates that plastic can still be placed deliberately and precisely using this method despite the internal part temperatures exceeding the materials Tg. Although the plastic remains fluid for an extended period, it is thick enough to hold its position and allows complex internal geometry to be resolved within the clear acrylic.

### Example 5

### Rheology of Materials

A general description of the developed rheological method consists of melting the resin between parallel plates with a narrow gap, between 1.8mm and 0.5mm. In presence of fillers, the gap must be at least 10 times larger than the larger filler particle in the resin. It is preferable to heat the sample at least 30-50 °C above the melting temperature, but much before decomposition temperature. The rheometer used in this invention is the MCR502 from Anton Paar. The software is programmed to shear the sample by imposing a small oscillatory force while simultaneously decreasing the temperature at a constant cooling rates (between 5 °C /min and 10 °C /min are suggested). The test should be always run within the linear viscoelastic region which can be determined by running a strain amplitude sweep for each resin prior to the temperature sweep experiment.

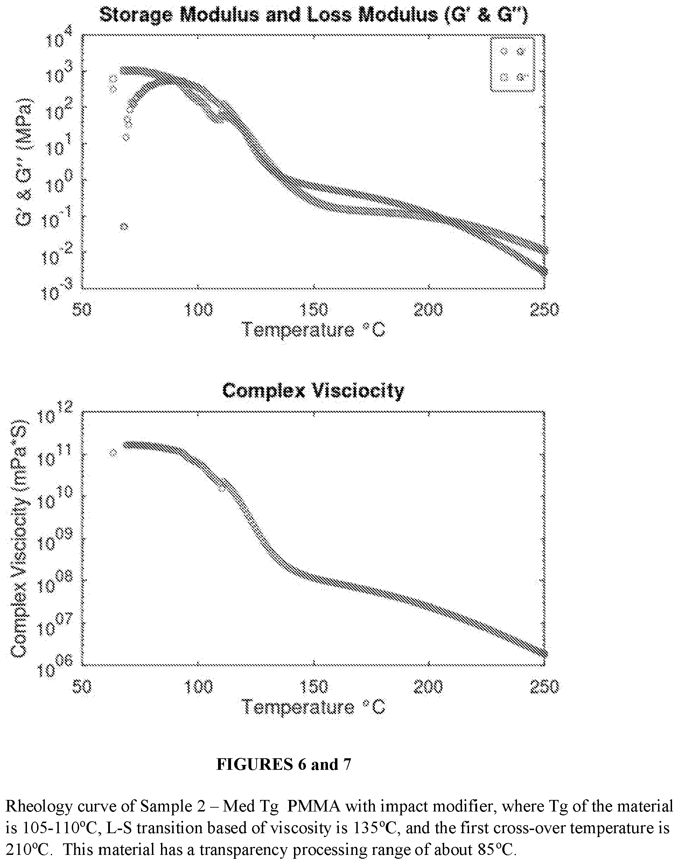

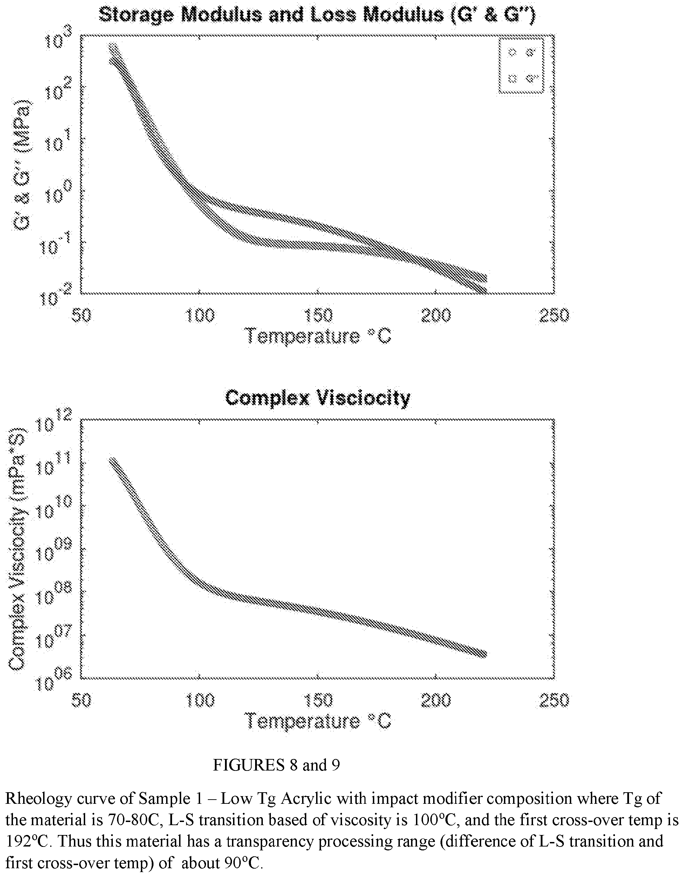

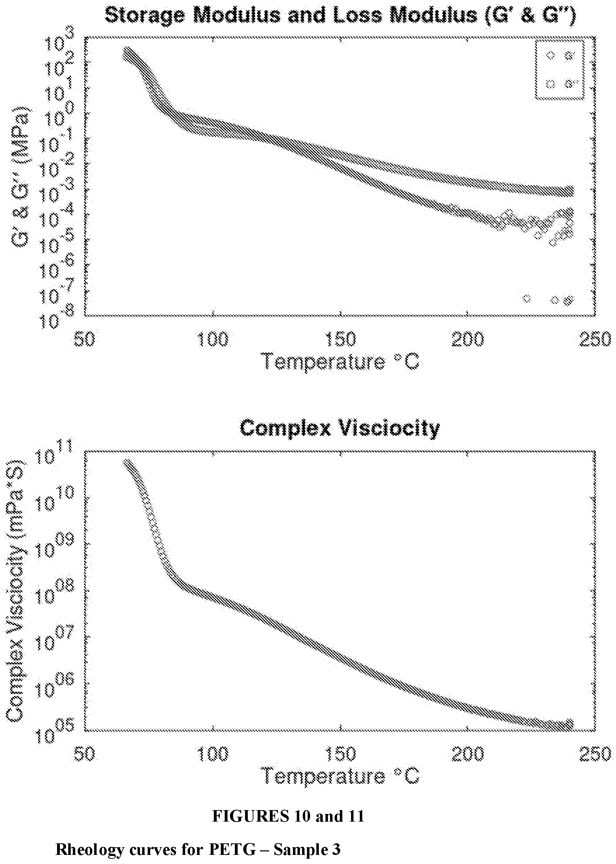

The rheology of a lower Tg acrylic and higher Tg acrylic are shown in Figures 6 and 7; 8 and 9; and 10 and 11. From the viscosity curves, the liquid to solid transition temperature can be obtained. From the modulus, the first cross-over temperature where a part starts exhibiting some stiffening behavior (where G'>G") has be obtained.

Generally speaking, the dynamic moduli are a measure of the viscoelastic properties of the material, being the storage modulus G', i.e. the elastic response, and the loss modulus G", i.e. the viscous response of the polymer. The crossover temperature (G'=G") can be taken as the onset of stiffening because the elastic modulus at lower temperature is dominating the viscous response. In addition, the L-S transition temperature can be obtained and the transparency processing range can be calculated.

### Example 6:

### Evaluation of transparency between one lower Tg and one higher Tg Amorphous Polyamide

### Internal transparency plaque measurements

The transparency of parts made from two amorphous polyamides (PA) based on a PA11/aromatic PA copolymer were evaluated in this study. The objective is to underline that the ability of a material to print transparent parts is mostly related to its Tg and, more specifically, if the 3D printer heating parameters can allow the internal part temperature of being higher than the Tg of the material during the print and less dependent on the chemistry of the material and its flow rate. For this purpose, the two selected PA materials display different Tg's as described in **Table 6.**

**Table 6: Amorphous polyamide data**

| Polyamide | Tg (°C) | MFR (10g/min at 275°C, 2.16kg load) |
|---|---|---|
| PA1 | 101 | 8 |
| PA2 | 150 | 30 |

For conducting this study, 35 mm by 35 mm plaques that were 3.2 mm thick were printed on an Ultimaker S5 3D printer with both PA materials. All the printing conditions of the solid (100% infill) plaques as well as the resulting transmission and haze data are summarized in **Table 7.** The transmission and haze for each of these plaques were measured similarly to Example 1.

**Table 7: Printing conditions and transparency measurements**

| **Material** | **Experiments** | **Nozzle temp. (°C)** | **Build plate temp. (°C)** | **Layer height (mm)** | **As printed** | | **2 Acrylic Plaques + Glycerol** | |
|---|---|---|---|---|---|---|---|---|
| | | | | | T | H | T | H |
| PA 1 | 1 | 280 | 120 | 0.2 | 79.9 | 23 | 89.1 | 9.25 |
| PA 2 | 2 | 280 | 140 | 0.2 | 81.7 | 83 | 83.5 | 23.8 |
| | 3 | 280 | 140 | 0.05 | 82.1 | 74 | 86.6 | 18.7 |

Under the described printing conditions, parts printed from PA1 exhibited high transmission and low haze at 89.1% and 9.25%, respectively. This demonstrates that when the build plate temperature is kept high relative to the Tg of a material (120 °C and 101 °C, respectively), an amorphous thermoplastic with appropriate rheological characteristics can be printed to generate a part with high transmission and low haze. PA1 has a first G'/G" crossover temp of 175°C and a L-S transition of ~ 125°C for a transparency processing range of 50°C. In the meantime, the higher Tg PA2 was only able to achieve 18.7 % under the most ideal conditions of experiment 3 (lower layer height helps to retain more heat between layers during print) despite it having a higher MFR than PA1.

### IR imaging of the different PA materials

In order to confirm our previous statement that relates the internal part temperature during print to the resulting PA's part transparency level, a Flir E60 IR thermal camera was used to record images of the printing process (similarly than example 3). For this purpose, each amorphous PA filaments was used to print a solid (100% infill) block of 20*30 mm (X*Y) that is 20 mm tall (Z) on an Ultimaker S.5 printer according to the printing conditions described in **Table 8.**

**Table 8: Printing conditions for IR thermal imaging**

| **Material** | **Layer height (mm)** | **Nozzle temp. (°C)** | **Build plate temp. (°C)** | **Fan** |
|---|---|---|---|---|
| **PA1** | 0.2 | 280 | 120 | OFF |
| **PA2** | | | 140 | |

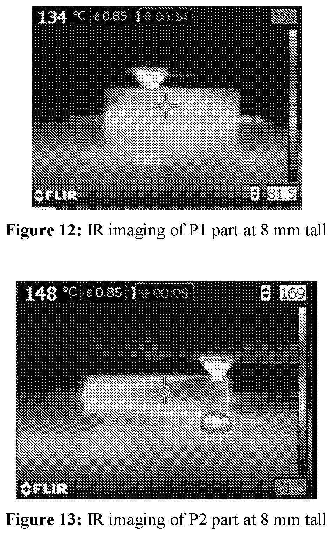

The thermal image in **Figure 12** shows a PA1 part that measures 20mmx30mm that is 8 mm tall at the time the image was taken. The temperature at the measurement point in the center of the screen is 134 °C. The recorded image illustrates that a high build plate temperature (120 °C), a high nozzle temperature (280 °C) combined with a lack of cooling fan allow to hold an internal part temperature above the Tg of the material during the print (ΔT=33°C) while still being able to maintain its shape along the print. These measurements of the internal part temperature can be directly related to the good transparency performance of the PA1. To confirm the aformentioned statement, the thermal image of the PA2 part was also recorded and is shown in **Figure 13** at 8 mm tall at the time the images were taken. However, despite increasing build plate to 140 °C, the internal temperature only heat up to 148 °C and the required ΔT above the Tg to print high transparent parts was not reached. Therefore, even by displaying high flow, PA2 material couldn't reach the same level of transparency than PA1 exhibited.

## Claims

1. A material extrusion additive manufacturing process, comprising the steps of:
a) selecting an amorphous thermoplastic polymer composition, said composition as a whole having a certain Tg, measured by DSC according to the standard ASTM E1356,
b) selecting conditions sufficient to provide an internal temperature of the composition at the point of printing, wherein the Tg of the composition as a whole is at least 25°C, more preferably at least 35°C, more preferably at least 45°C, more preferably at least 55°C, at least 65°C and at least 75°C below the internal temperature,
c) melt extrusion printing said amorphous thermoplastic polymer to form an article,
wherein the difference in temperature between the amorphous thermoplastic polymer Tg and the internal temperature of a given printed dot or line of the thermoplastic polymer composition remains for at least 5 minutes, preferably at least 10 minutes, more preferably at least 15 minutes, and most preferably at least 20 minutes following printing.

2. The additive manufacturing process of claim 1, wherein said selection of conditions to provide the desired internal temperature, involves one or more of the following:
a) selection of a build plate temperature above the amorphous thermoplastic polymer composition Tg, more preferably at least 10°C, 20 °C, 25 °C and most preferably at least 30°C above the Tg of the amorphous thermoplastic polymer composition;
b) selection of a heated chamber temperature of at least 30°C, preferably at least 40°C, preferably at least 50°C., and most preferably at least 60°C;
c) use of an radiant heating, conductive heating, or forced convective heating source to supplement the heat at the point of printing;
d) little or no fan or active cooling;
e) use of selected additives in the composition to lower the Tg of the composition, or to help maintain the temperature of the composition for an increased period of time;
f) use of a pre-heated airflow that interacts with the part being printed to reduce cooling or cooling rate and even actively heat the printed article.

3. The additive manufacturing process of claim 1, wherein said heated chamber temperature, radiant heating and/or heating fan speed is varied over time.

4. The additive manufacturing process of claim 1, wherein said amorphous thermoplastic polymer composition comprises a polymer selected from the group consisting of a (meth)acrylic polymer, co-polyester, and polycarbonate, amorphous polyamides.

5. The additive manufacturing process of claim 1, wherein said amorphous thermoplastic polymer composition has a Tg of less than 160°C, preferably less than 150°C, preferably less than 140°C, preferably less than 130°C, preferably less than 114°C, preferably less than 105 °C, 95°C, preferably less than 90°C, preferably less than 85°C, more preferably less than 80°C, and most preferably less than 75°C.

6. The additive manufacturing process of claim 1, wherein said amorphous thermoplastic polymer composition is selected from the group consisting of:
a) a copolymer having the requisite Tg,
b) a blend of a polymer having a Tg of greater than 160°C and a low viscosity polymer,
c) a blend of a polymer having a Tg of greater than 160°C, and an additive capable of lowering the Tg, or increasing the open time of the polymer composition.

7. The additive manufacturing process of claim 1, wherein said composition has a viscosity at a shear of 1 sec⁻¹ of less than 100,000 Pa-sec, preferably less than 10,000, at a temperature of 230°C, and a viscosity of 20 to 2,000 Pa-s, preferably from 25 to 1,000 Pa-s, and more preferably 30 to 500 Pa-s at a shear rate of 100 sec⁻¹ at a temperature of 230°C, as measured by a rotational viscometer according to ASTM C965.

8. The additive manufacturing process of claim 1, wherein said composition has a transparency processing range of greater than 40°C, greater than 50°C, greater than 60°C, preferably greater than 70°C, and more preferably greater than 80°C, as defined by the difference in temperature of the L-S transition and the first cross-over temperature, as measured by rheology, as disclosed in the specification.

9. The additive manufacturing process of claim 1, wherein said amorphous thermoplastic polymer composition further comprises impact modifiers at a level of 5 to 60 weight percent, preferably 10 to 35 weight percent, more preferably 15 to 30 weight percent based on the weight of the total composition.

10. The additive manufacturing process of claim 1, wherein said amorphous thermoplastic polymer composition temperature is provided and/or maintained by one or more means selected from the group consisting of: a) low or no fan or active cooling, b) a heated build plate, c) a heated chamber, and d) a radiant heat source.

11. The additive manufacturing process of claim 1, wherein said 3D printed article contains said amorphous thermoplastic polymer composition with a density of at least 95%, 97% preferably 98% preferably 99% of the bulk density of the polymer as measured by ASTM D792.

12. The additive manufacturing process of claim 1, wherein said amorphous thermoplastic polymer composition comprises an acrylic polymer.

13. The additive manufacturing process of claim 1, wherein said amorphous thermoplastic polymer composition is printed at a layer height of ≥ 0.05 mm, ≥ 0.1 mm, ≥ 0.2 mm, ≥ 0.3 mm, ≥ 0.4 mm.

14. An internally clear 3-D printed article, made according to the process of any of claims 1 to 13, wherein said article comprises an amorphous thermoplastic polymer composition having a printing layer thickness of greater than or equal to 0.1 mm, preferably greater than or equal to 0.2 mm. preferably greater than or equal to 0.3 mm, preferably greater than or equal to 0.4 mm, and wherein the internal haze, measured according to ASTM D1003 with a BYK-Gardner Haze-Gard machine, is less than 25%, <preferably less than 20%, preferably less than 10%, and preferably less than 5%, preferably said amorphous thermoplastic polymer composition comprises an acrylic composition, a co-polyester, a polycarbonate, or an amorphous polyamide.

15. The internally clear 3D printed article of claim 14, wherein said article is clear, wherein a 3-D printed part of 2 mm thickness, has a total white light transmittance of greater than 80%, preferably greater than 84%, more preferably greater than 86% and most preferably greater than 88%, and a haze of less than 80%, preferably less than 70%, and more preferably less than 60% can be obtained, as measured according to ASTM D1003, and wherein said composition is clear, wherein a 3-D printed part of 2 mm thickness, printed at a line height of 0.1 mm or more, 0.2 mm or more, 0.3 mm or more and 0.4 mm or more has an internal haze of less than 25%, preferably less than 20%, more preferably less than 15%, more preferably less than 10% and most preferably less than 5%.

## Patentansprüche

1. Additives Fertigungsverfahren durch Materialextrusion, umfassend die Schritte:
a) Auswählen einer amorphen thermoplastischen Polymerzusammensetzung, wobei die Zusammensetzung als Ganzes eine bestimmte Tg, gemessen durch DSC gemäß dem Standard ASTM E1356, aufweist,
b) Auswählen von Bedingungen, die ausreichen, um eine Innentemperatur der Zusammensetzung an der Stelle des Druckens bereitzustellen, wobei die Tg der Zusammensetzung als Ganzes wenigstens 25 °C, bevorzugter wenigstens 35 °C, bevorzugter wenigstens 45 °C, bevorzugter wenigstens 55 °C, wenigstens 65 °C und wenigstens 75 °C unter der Innentemperatur liegt,
c) Schmelzextrusionsdrucken des amorphen thermoplastischen Polymers, um einen Gegenstand zu bilden,
wobei der Temperaturunterschied zwischen der Tg des amorphen thermoplastischen Polymers und der Innentemperatur eines/einer gegebenen gedruckten Punkts oder Linie der thermoplastischen Polymerzusammensetzung für wenigstens 5 Minuten, vorzugsweise wenigstens 10 Minuten, bevorzugter wenigstens 15 Minuten und höchst bevorzugt wenigstens 20 Minuten nach dem Drucken bestehen bleibt.

2. Additives Fertigungsverfahren gemäß Anspruch 1, wobei das Auswählen von Bedingungen zur Bereitstellung der gewünschten Innentemperatur eines oder mehrere der folgenden einbezieht:
a) Auswahl einer Bauplattentemperatur über der Tg der amorphen thermoplastischen Polymerzusammensetzung, bevorzugter wenigstens 10 °C, 20 °C, 25 °C und höchst bevorzugt wenigstens 30 °C über der Tg der amorphen thermoplastischen Polymerzusammensetzung;
b) Auswahl einer Heizkammertemperatur von wenigstens 30 °C, vorzugsweise wenigstens 50 °C und höchst bevorzugt wenigstens 60 °C;
c) Verwendung einer Strahlungsheiz-, Widerstandsheiz- oder Zwangskonvektionsheizquelle zum Ergänzen der Wärme an der Stelle des Druckens;
d) wenig oder keine Gebläse- oder aktive Kühlung;
e) Verwendung von ausgewählten Zusatzstoffen in der Zusammensetzung, um die Tg der Zusammensetzung zu senken oder um Halten der Temperatur der Zusammensetzung für einen längeren Zeitraum zu erleichtern;
f) Verwendung eines vorgeheizten Luftstroms, der mit dem gedruckten Teil wechselwirkt, um Kühlung oder Kühlrate zu verringern oder den gedruckten Gegenstand sogar aktiv zu heizen.

3. Additives Fertigungsverfahren gemäß Anspruch 1, wobei die Heizkammertemperatur, die Strahlungsheizung und/oder Heizgebläsegeschwindigkeit über die Zeit variiert werden.

4. Additives Fertigungsverfahren gemäß Anspruch 1, wobei die amorphe thermoplastische Polymerzusammensetzung ein Polymer ausgewählt aus der Gruppe bestehend aus einem (Meth)acrylpolymer, Copolyester und Polycarbonat, amorphen Polyamiden, umfasst.

5. Additives Fertigungsverfahren gemäß Anspruch 1, wobei die amorphe thermoplastische Polymerzusammensetzung eine Tg von weniger als 160 °C, vorzugsweise weniger als 150 °C, vorzugsweise weniger als 140 °C, vorzugsweise weniger als 130 °C, vorzugsweise weniger als 114 °C, vorzugsweise weniger als 105 °C, 95 °C, vorzugsweise weniger als 90 °C, vorzugsweise weniger als 85 °C, bevorzugter weniger als 80 °C und höchst bevorzugt weniger als 75 °C aufweist.

6. Additives Fertigungsverfahren gemäß Anspruch 1, wobei die amorphe thermoplastische Polymerzusammensetzung ausgewählt ist aus der Gruppe bestehend aus:
a) einem Copolymer mit der erforderlichen Tg,
b) einem Gemisch eines Polymers mit einer Tg von höher als 160 °C und einem niederviskosen Polymer,
c) einem Gemisch eines Polymers mit einer Tg von höher als 160 °C und einem Zusatzstoff, der zum Senken der Tg oder Erhöhen der Offenzeit der Polymerzusammensetzung fähig ist.

7. Additives Fertigungsverfahren gemäß Anspruch 1, wobei die Zusammensetzung eine Viskosität bei einer Scherrate von 1 s⁻¹ von weniger als 100.000 Pa.s, vorzugsweise weniger als 10.000, bei einer Temperatur von 230 °C, und eine Viskosität von 20 bis 2.000 Pa.s, vorzugsweise von 25 bis 1.000 Pa.s und bevorzugter 30 bis 500 Pa.s, bei einer Scherrate von 100 s⁻¹ bei einer Temperatur von 230 °C, wie gemessen durch ein Rotationsviskosimeter gemäß ASTM C965, aufweist.

8. Additives Fertigungsverfahren gemäß Anspruch 1, wobei die Zusammensetzung einen Transparenz-Verarbeitungsbereich von größer als 40 °C, größer als 50 °C, größer als 60 °C, vorzugsweise größer als 70 °C und bevorzugter größer als 80 °C aufweist, wie definiert durch den Unterschied der Temperatur des L-S-Übergangs und der ersten Crossover-Temperatur, wie gemessen durch Rheologie, wie in der Beschreibung offenbart.

9. Additives Fertigungsverfahren gemäß Anspruch 1, wobei die amorphe thermoplastische Polymerzusammensetzung ferner Schlagzähmodifikatoren in einem Gehalt von 5 bis 60 Gewichtsprozent, vorzugsweise 10 bis 35 Gewichtsprozent, bevorzugter 15 bis 30 Gewichtsprozent, bezogen auf das Gewicht der Gesamtzusammensetzung, umfasst.

10. Additives Fertigungsverfahren gemäß Anspruch 1, wobei die Temperatur der amorphen thermoplastischen Polymerzusammensetzung durch ein oder mehrere Mittel ausgewählt aus der Gruppe bestehend aus: a) wenig oder keine Gebläse- oder aktive Kühlung, b) einer beheizten Bauplatte, c) einer beheizten Kammer und d) einer Strahlungsheizquelle bereitgestellt und/oder gehalten wird.

11. Additives Fertigungsverfahren gemäß Anspruch 1, wobei der 3D-gedruckte Gegenstand die amorphe thermoplastische Polymerzusammensetzung mit einer Dichte von wenigstens 95 %, 97 %, vorzugsweise 98 %, vorzugsweise 99 %, der Raumdichte des Polymers, wie gemessen durch ASTM D792, enthält.

12. Additives Fertigungsverfahren gemäß Anspruch 1, wobei die amorphe thermoplastische Polymerzusammensetzung ein Acrylpolymer umfasst.

13. Additives Fertigungsverfahren gemäß Anspruch 1, wobei die amorphe thermoplastische Polymerzusammensetzung in einer Schichthöhe von ≥ 0,05 mm, ≥ 0,1 mm, ≥ 0,2 mm, ≥ 0,3 mm, ≥ 0, 4 mm gedruckt wird.

14. Innen klarer 3D-gedruckter Gegenstand, hergestellt gemäß dem Verfahren gemäß einem der Ansprüche 1 bis 13, wobei der Gegenstand eine amorphe thermoplastische Polymerzusammensetzung mit einer Druckschichtdicke von größer als oder gleich 0,1 mm, vorzugsweise größer als oder gleich 0,2 mm, vorzugsweise größer als oder gleich 0,3 mm, vorzugsweise größer als oder gleich 0,4 mm, umfasst, und wobei die innere Trübung, gemessen gemäß ASTM D1003 mit einer BYK-Gardner Haze-Gard-Maschine, weniger als 25 %, vorzugsweise weniger als 20 %, vorzugsweise weniger als 10 % und vorzugsweise weniger als 5 % beträgt, wobei die amorphe thermoplastische Polymerzusammensetzung vorzugsweise eine Acrylzusammensetzung, einen Copolyester, ein Polycarbonat oder ein amorphes Polyamid umfasst.

15. Innen klarer 3D-gedruckter Gegenstand gemäß Anspruch 14, wobei der Gegenstand klar ist, wobei ein 3D-gedruckter Teil mit einer Dicke von 2 mm eine Gesamtdurchlässigkeit für weißes Licht von höher als 80 %, vorzugsweise höher als 84 %, bevorzugter höher als 86 % und höchst bevorzugt höher als 88 % aufweist und eine Trübung von weniger als 80 %, vorzugsweise weniger als 70 % und bevorzugter weniger als 60 %, wie gemessen gemäß ASTM D1003, erhalten werden kann, und wobei die Zusammensetzung klar ist, wobei ein 3D-gedruckter Teil mit einer Dicke von 2 mm, gedruckt mit einer Linienhöhe von 0,1 mm oder mehr, 0,2 mm oder mehr, 0,3 mm oder mehr und 0,4 mm oder mehr eine innere Trübung von weniger als 25 %, vorzugsweise weniger als 20 %, bevorzugter weniger als 15 %, bevorzugter weniger als 10 % und höchst bevorzugt weniger als 5 % aufweist.

## Revendications

1. Procédé de fabrication additive par extrusion de matière, comprenant les étapes de :
a) sélection d'une composition de polymère thermoplastique amorphe, ladite composition dans sa globalité ayant une certaine Tg, mesurée par DSC selon la norme ASTM E1356,
b) sélection de conditions suffisantes pour fournir une température interne de la composition au niveau du point d'impression, la Tg de la composition dans sa globalité étant d'au moins 25 °C, plus préférablement d'au moins 35 °C, plus préférablement d'au moins 45 °C, plus préférablement d'au moins 55 °C, d'au moins 65 °C et d'au moins 75 °C en dessous de la température interne,
c) impression par extrusion de masse fondue dudit polymère thermoplastique amorphe pour former un article,
la différence de température entre la Tg du polymère thermoplastique amorphe et la température interne d'un point ou d'une ligne imprimé(e) donné(e) de la composition de polymère thermoplastique restant pendant au moins 5 minutes, préférablement au moins 10 minutes, plus préférablement au moins 15 minutes, et le plus préférablement au moins 20 minutes suivant l'impression.

2. Procédé de fabrication additive selon la revendication 1, ladite sélection de conditions pour fournir la température interne souhaitée, impliquant l'un ou plusieurs parmi ce qui suit :
a) la sélection d'une température de plaque de construction au-dessus de la Tg de la composition de polymère thermoplastique amorphe, plus préférablement au moins 10 °C, 20 °C, 25 °C et le plus préférablement au moins 30 °C au-dessus de la Tg de la composition de polymère thermoplastique amorphe ;
b) la sélection d'une température de compartiment chauffé d'au moins 30 °C, préférablement au moins 40 °C, préférablement au moins 50 °C, et le plus préférablement au moins 60 °C ;
c) l'utilisation d'un chauffage radiant, d'un chauffage conductif, ou d'une source de chaleur convective forcée pour compléter la chaleur au niveau du point d'impression ;
d) peu ou pas de refroidissement par un ventilateur ou actif ;
e) l'utilisation d'additifs choisis dans la composition pour baisser la Tg de la composition, ou pour aider au maintien de la température de la composition pendant une période de temps augmentée ;
f) l'utilisation d'un courant d'air préchauffé qui interagit avec la pièce qui est imprimée pour réduire le refroidissement ou la vitesse de refroidissement et même chauffer activement l'article imprimé.

3. Procédé de fabrication additive selon la revendication 1, ladite température de compartiment chauffé, ledit chauffage radiant et/ou ladite vitesse de ventilateur de chauffage étant modifié(e) dans le temps.

4. Procédé de fabrication additive selon la revendication 1, ladite composition de polymère thermoplastique amorphe comprenant un polymère choisi dans le groupe constitué par un polymère (méth)acrylique, un co-polyester et un polycarbonate, des polyamides amorphes.

5. Procédé de fabrication additive selon la revendication 1, ladite composition de polymère thermoplastique amorphe ayant une Tg inférieure à 160 °C, préférablement inférieure à 150 °C, préférablement inférieure à 140 °C, préférablement inférieur à 130 °C, préférablement inférieure à 114 °C, préférablement inférieure à 105 °C, préférablement inférieure à 95 °C, préférablement inférieure à 90 °C, préférablement inférieure à 85 °C, plus préférablement inférieure à 80 °C et le plus préférablement inférieure à 75 °C.

6. Procédé de fabrication additive selon la revendication 1, ladite composition de polymère thermoplastique amorphe étant choisie dans le groupe constitué par :
a) un copolymère ayant la Tg requise,
b) un mélange d'un polymère ayant une Tg de plus de 160 °C et d'un polymère à faible viscosité,
c) un mélange d'un polymère ayant une Tg de plus de 160 °C, et d'un additif capable d'abaisser la Tg, ou d'augmenter le temps ouvert de la composition de polymère.

7. Procédé de fabrication additive selon la revendication 1, ladite composition ayant une viscosité à un cisaillement de 1 s⁻¹ inférieure à 100 000 Pa.s, préférablement inférieure à 10 000, à une température de 230 °C, et une viscosité de 20 à 2 000 Pa.s, préférablement de 25 à 1 000 Pa.s, et plus préférablement 30 à 500 Pa.s à une vitesse de cisaillement de 100 s⁻¹ à une température de 230 °C, comme mesurée par un viscosimètre rotatif selon la norme ASTM C965.

8. Procédé de fabrication additive selon la revendication 1, ladite composition ayant une plage de transformation de transparence supérieure à 40 °C, supérieure à 50 °C, supérieure à 60 °C, préférablement supérieure à 70 °C, et plus préférablement supérieure à 80 °C, comme définie par la différence de température de la transition L-S et la première température de croisement, comme mesurée par rhéologie, comme divulguée dans la description.

9. Procédé de fabrication additive selon la revendication 1, ladite composition de polymère thermoplastique amorphe comprenant en outre des modificateurs d'impact à un taux de 5 à 60 pour cent en poids, préférablement 10 à 35 pour cent en poids, plus préférablement 15 à 30 pour cent en poids sur la base du poids de la composition totale.

10. Procédé de fabrication additive selon la revendication 1, ladite température de composition de polymère thermoplastique amorphe étant fournie et/ou maintenue par un ou plusieurs moyens choisis dans le groupe constitué par : a) peu ou pas de refroidissement par un ventilateur ou actif, b) une plaque de construction chauffée, c) un compartiment chauffé, et d) une source de chaleur radiante.

11. Procédé de fabrication additive selon la revendication 1, ledit article imprimé en 3D contenant ladite composition de polymère thermoplastique amorphe avec une densité d'au moins 95 %, 97 %, préférablement 98 %, préférablement 99 % de la densité apparente du polymère comme mesurée par la norme ASTM D792.

12. Procédé de fabrication additive selon la revendication 1, ladite composition de polymère thermoplastique amorphe comprenant un polymère acrylique.

13. Procédé de fabrication additive selon la revendication 1, ladite composition de polymère thermoplastique amorphe étant imprimée à une hauteur de couche de ≥ 0,05 mm, ≥ 0,1 mm, ≥ 0,2 mm, ≥ 0,3 mm, ≥ 0,4 mm.

14. Article imprimé en 3D transparent de manière interne, préparé selon le procédé selon l'une quelconque des revendications 1 à 13, ledit article comprenant une composition de polymère thermoplastique amorphe ayant une épaisseur de couches d'impression supérieure ou égale à 0,1 mm, préférablement supérieure ou égale à 0,2 mm, préférablement supérieure ou égale à 0,3 mm, préférablement supérieure ou égale à 0,4 mm, et le trouble interne, mesuré selon la norme ASTM D1003 avec une machine BYK-Gardner Haze-Gard, étant inférieur à 25 %, < préférablement inférieur à 20 %, préférablement inférieur à 10 %, et préférablement inférieur à 5 %, préférablement ladite composition de polymère thermoplastique amorphe comprenant une composition acrylique, un co-polyester, un polycarbonate ou un polyamide amorphe.

15. Article imprimé en 3D transparent de manière interne selon la revendication 14, ledit article étant transparent, une pièce imprimée en 3D d'une épaisseur de 2 mm, ayant une transmittance de lumière blanche totale supérieure à 80 %, préférablement supérieure à 84 %, plus préférablement supérieure à 86 % et le plus préférablement supérieure à 88 %, et un trouble inférieur à 80 %, préférablement inférieur à 70 %, et plus préférablement inférieur à 60 % pouvant être obtenu, comme mesuré selon la norme ASTM D1003, et ladite composition étant transparente, une pièce imprimée en 3D d'une épaisseur de 2 mm, imprimée à une hauteur de ligne de 0,1 mm ou plus, 0,2 mm ou plus, 0,3 mm ou plus et 0,4 mm ou plus ayant un trouble interne inférieur à 25 %, préférablement inférieur à 20 %, plus préférablement inférieur à 15 %, plus préférablement inférieur à 10 % et le plus préférablement inférieur à 5 %.
